# EUROPÄISCHE PATENTSCHRIFT

(11) **EP 2 678 646 B1**
(45) Veröffentlichungstag und Bekanntmachung des Hinweises auf die Patenterteilung: **27.11.2019**
(21) Anmeldenummer: 12705080.5
(22) Anmeldetag: 31.01.2012
(51) Int. Cl.: B65B 1/36, G01F 11/00, G01F 11/24

(54) **VORRICHTUNG ZUM DOSIEREN VON PULVERFÖRMIGEM FÜLLGUT**
APPARATUS FOR METERING PULVERULENT FILLING MATERIAL
DISPOSITIF DE DOSAGE DE MATIÈRES PULVÉRULENTES

(30) Priorität: 21.02.2011 DE 102011004456; 27.10.2011 DE 102011085283
(43) Veröffentlichungstag der Anmeldung: 01.01.2014
(73) Patentinhaber: Robert Bosch GmbH, 70442 Stuttgart (DE)
(72) Erfinder: SCHLIPF, Jens, 71691 Freiberg A. N. (DE); RUNFT, Werner, 71364 Winnenden (DE); BOEHRINGER, Walter, 73630 Remshalden (DE)
(74) Vertreter: DREISS Patentanwälte PartG mbB
(86) Internationale Anmeldenummer: PCT/EP2012/051586
(87) Internationale Veröffentlichungsnummer: WO 2012/113615

(56) Entgegenhaltungen:
- CH-A- 524 362
- DE-B- 1 210 997
- US-A1- 2005 173 552
- US-B1- 6 283 176

## Beschreibung

### Stand der Technik

Die vorliegende Erfindung betrifft eine Vorrichtung zum Dosieren von pulverförmigem Füllgut nach der Gattung des unabhängigen Anspruchs. Eine gattungsgemäße Vorrichtung ist bereits aus der DE 10 2007 018 036 A1 bekannt. Diese umfasst ein Füllrad mit wenigstens einer Dosierkammer zur Aufnahme von Füllgut, wobei die Dosierkammer in einem Hülsenelement angeordnet ist. Es ist eine Verstelleinrichtung vorgesehen, um eine Position des Hülsenelements in Radialrichtung des Füllrads zu verstellen. Das Hülsenelement ist in einer Öffnung in einem Gehäuse angeordnet.

Aus der CH 524362 A ist eine Einrichtung zum Zuteilen von pulverförmigem oder körnigem Material bekannt. Eine Zuführ- oder Zuspeisewalze ist auf einer Welle angeordnet. Die Zuspeisewalze weist einen Kem auf, auf welcher axial mittels eines geriffelten Bolzens in einem kleinen Bereich verstellbar ist. Die flachköpfigen Stifte sind an ihren inneren Enden kegelförmig ausgebildet und passen in kegelförmige Ausnehmungen oder Löcher im Kem. Wenn der Kem mittels des Bolzens axial nach rechts verschoben wird, werden die Stifte aus den Ausnehmungen herausgehoben und verringern das Ladevolumen der Kammern. Auf diese Weise kann das Volumen der Ladekammern kontinuierlich über einen begrenzten Bereich eingestellt werden.

Aus der US 2005/0173552 A1 ist eine Pulverfüllmaschine bekannt. Ein Filter ist zwischen einer zweiten Öffnung einer Aufnahme für Pulver und einer Ansaugung angeordnet.

Der Erfindung liegt die Aufgabe zugrunde, eine Vorrichtung zum Dosieren von pulverförmigem Füllgut anzugeben, welche in besonders einfacher Weise eine einfache Verstellung des Dosiervolumens bei einer Vielzahl von Dosierkammern ermöglicht. Diese Aufgabe wird gelöst durch die Merkmale des unabhängigen Anspruchs.

### Vorteile der Erfindung

Die erfindungsgemäße Vorrichtung zum Dosieren von pulverförmigem Füllgut gemäß den Merkmalen des unabhängigen Anspruchs hat demgegenüber den Vorteil, dass sie sich in besonders einfacher Art und Weise durch die Integration mehrerer Dosierkammern in einem gemeinsamen Bauteil, vorzugsweise einer Formatleiste, verstellen lässt. Dadurch kann die Zahl der Einzelteile der Dosiervorrichtung reduziert werden. Insbesondere kann auf eine nur geringe Anzahl von aufwendig herzustellenden Formatteilen zurückgegriffen werden aufgrund der nun einfachen Verstellmöglichkeit des Dosiervolumens mehrerer integrierter Dosierkammern. Außerdem lässt sich die Vorrichtung kompakt als Baugruppe gemeinsam montieren und verschieben. Erfindungsgemäß ist vorgesehen, dass das gemeinsame Bauteil eine Ausnehmung aufweist zur Aufnahme eines Stützmittels. Zwischen der Unterseite der Dosierkammern und dem Stützmittel kann nun in besonders einfacher Weise ein Filter eingebracht werden. Dieser Filter kann sich vorzugsweise über mehrere Dosieröffnungen hinweg erstrecken, sodass für mehrere Dosierkammern nur ein einziger Filter verwendet werden kann. Auch die Austauschbarkeit des Filters wird dadurch erleichtert.

Erfindungsgemäß ist vorgesehen, dass das Stützmittel einen gemeinsamen Luftkanal aufweist, der in Verbindung steht mit mehreren Dosierkammern. Dadurch kann das Bauteil weiter vereinfacht werden und stellt eine sichere Befüllung bzw. Entleerung der Dosierkammern durch die entsprechende Beaufschlagung mit Vakuum bzw. Druckluft sicher.

In einer zweckmäßigen Weiterbildung ist vorgesehen, dass mehrere gemeinsame Bauteile vorgesehen sind, die jeweils eine Vielzahl von Dosierkammern mit den entsprechenden Hülsenansätzen aufweisen. Diese gemeinsamen Bauteile können durch ein einziges Verstellmittel gleichermaßen zur Änderung des Dosiervolumens verstellt werden. Als Verstellmittel ist vorzugsweise ein Nocken verwendet.

In einer zweckmäßigen Weiterbildung ist vorgesehen, dass Federmittel eine Gegenkraft zu der Bewegungsrichtung des Verstellmittels auf das gemeinsame Bauteil ausüben. Damit wird erreicht, dass das gemeinsame Bauteil auch wieder in der der Bewegungsrichtung entgegengesetzten Richtung zurück verstellt werden kann.

In einer zweckmäßigen Weiterbildung ist vorgesehen, dass der Luftkanal mit einem Kupplungsteil verbunden ist. Dadurch wird gewährleistet, dass das gemeinsame Bauteil mit darin enthaltenem Luftkanal auch zumindest in radialer Richtung verstellt werden kann.

Weitere zweckmäßige Weiterbildungen ergeben sich aus weiteren abhängigen Ansprüchen und aus der Beschreibung.

### Zeichnung

Ein Ausführungsbeispiel der erfindungsgemäßen Vorrichtung zum Dosieren von pulverförmigem Füllgut ist in der Zeichnung dargestellt und wird nachfolgend näher beschrieben.

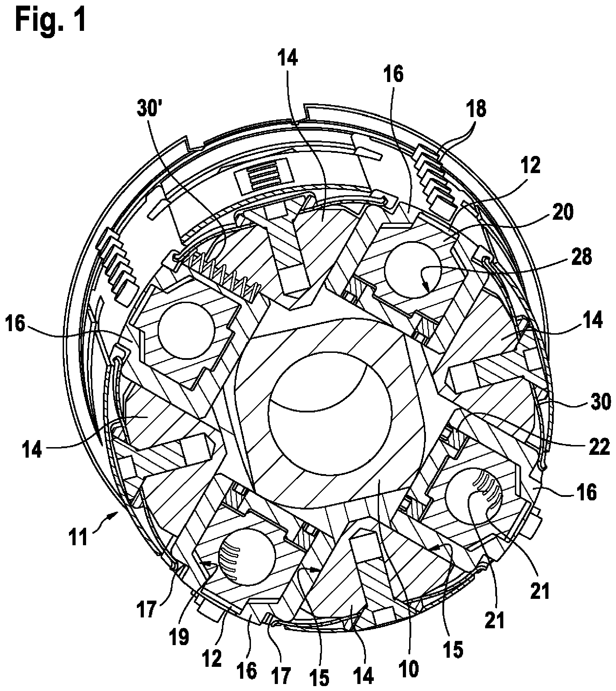

Es zeigen
Die Figur 1 eine perspektivische Ansicht als Schnitt quer durch das Dosierrad sowie
die Figur 2 einen Längsschnitt in perspektivischer Darstellung durch das Dosierrad.

Eine Vorrichtung 8 zum Dosieren umfasst ein Dosierrad 11. Dieses Dosierrad 11 besteht aus Führungsmitteln 14, die einen feststehenden Teil des Dosierrads 11 bilden und Führungsflächen 15 aufweisen, über die gemeinsame Bauteile 16 in radialer Richtung verschoben werden können. Hierzu sind Verstellmittel 10 vorgesehen, welche eine nockenförmige Kontur aufweisen. Durch Drehung der Verstellmittel 10 können die vier gemeinsamen Bauteile 16 in gleicher Weise in radialer Richtung verstellt werden. Beispielhaft weist das Dosierrad 11 vier gemeinsame Bauteile 16 auf, die jeweils um 90° versetzt am Umfang des Dosierrads 11 angeordnet sind. Das gemeinsame Bauteil 16 ist im Wesentlichen rechteckförmig ausgebildet. Im Inneren weist es einen Hohlraum 19 auf. Der Hohlraum 19 dient der Aufnahme eines Stützmittels 20. An der nach außen orientierten Oberseite weist das gemeinsame Bauteil 16 mehrere in Achsrichtung nebeneinander angeordnete Hülsenansätze 18 auf. In Verlängerung der Öffnungen der Hülsenansätze 18 weist das Stützmittel 20 entsprechende Öffnungen 21 auf. Das Stützmittel 20 weist einen im Wesentlichen rechteckigen Querschnitt auf, wobei über Abschrägungen die nach Außen gerichtete Oberseite gegenüber der Basis in der Länge reduziert ist. Die Seitenflächen sind parallel ausgebildet und im Wesentlichen in radialer Richtung orientiert, so dass über diese Seitenflächen eine Verschiebbarkeit des Stützmittels 20 relativ zum gemeinsamen Bauteil 16 erreicht wird. Der Innenraum des Stützmittels 20 ist ebenfalls hohl ausgeführt, sodass sich ein Luftkanal 28 bildet. Dieser Luftkanal 28 verbindet sämtliche Öffnungen 21 des Stützmittels 20. Die Oberseite des Stützmittels 20 dient als Gegenfläche für einen Filter 12, der zwischen den Hülsenansätzen 18 und den Öffnungen 21 angeordnet wird. Das Stützmittel 20 kann innerhalb des Hohlraums 19 leicht in radialer Richtung verschoben werden, sodass der Filter 12 eingeklemmt werden kann bzw. zum Austausch des Filters 12 auch das Einklemmen unterbunden werden kann. Zum Einklemmen des Filters 12 sind entsprechende Klemmmittel 22 wie beispielsweise Schrauben, besonders bevorzugt Wurmschrauben vorgesehen, die das Stützmittel 20 radial nach außen gegen den Filter 12 und das gemeinsame Bauteil 16 drücken. An der Außenseite der Führungsmittel 14 sind Federmittel 30 befestigt, die am Außenumfang in eine Schulter 17 des gemeinsamen Bauteils 16 eingreifen. Diese Schulter 17 ist beispielsweise durch eine entsprechende Ausnehmung an der radial außen liegenden Seite des gemeinsamen Bauteils 16 ausgebildet. Das Federmittel 30 übt eine in Richtung zum Mittelpunkt des Dosierrads 11 gerichtete Kraft auf das gemeinsame Bauteil 16 aus, so dass bei einer Verringerung des Hubs des Verstellmittels 10 das gemeinsame Bauteil 16 in Richtung zum Mittelpunkt des Dosierrads 11 bewegt wird. Alternativ könnte auch ein Federmittel 30' vorgesehen werden, welches in radialer Richtung angeordnet ist und sich an einer näher am Mittelpunkt angeordneten Schulter des gemeinsamen Bauteils 16 gegenüber dem Führungsmittel 14 abstützt, um die entsprechende Kraft in Richtung des Mittelpunkts aufzubringen.

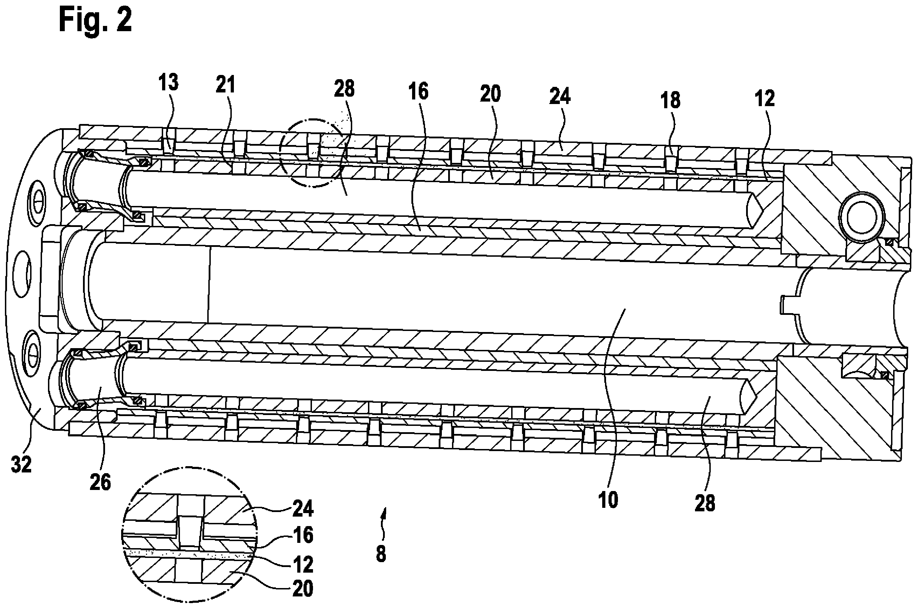

Gemäß Figur 2 ist das Dosierrad 11 nun mit einer Dosierwalzenhülse 24 gezeigt, die die Außenfläche bzw. Mantelfläche des Dosierrads 11 bildet. In radialer Verlängerung zu den Hülsenansätzen 18 sind jeweils entsprechende Öffnungen in der Dosierwalzenhülse 24 vorgesehen. Der Innendurchmesser dieser Öffnungen der Dosierwalzenhülse 24 ist angepasst an den Außendurchmesser der Hülsenansätze 18, sodass bei einer Verschiebung des gemeinsamen Bauteils 16 in radialer Richtung nach Außen die Hülsenansätze 18 in die Öffnungen der Dosierwalzenhülse 24 verfahren werden können. Eine Dosierkammer 13 wird nun gebildet durch das Volumen, welches über die Öffnungen der Dosierwalzenhülse 24, die Innenöffnungen der Hülsenansätze 18 bis zum Filter 12 zur Befüllung mit Füllgut begrenzt wird. Durch eine radiale Verstellung der Hülsenansätze 18 kann das Dosiervolumen der Dosierkammern 13 verändert werden. Die Dosierwalzenhülse 24 wird gehalten durch die außen liegenden Flächen des Führungsmittels 14 und seitlich angeordnete Lagerdeckel 32. Die gemeinsamen Bauteile 16 sind relativ zu der Dosierwalzenhülse 24 verstellbar ausgebildet. In dem Lagerdeckel 32 befindet sich auch eine Öffnung für den Luftanschluss des Luftkanals 28. Diese Öffnung am Lagerdeckel 32 ist über ein Kupplungsteil 26 mit dem Luftkanal 28 verbunden, so dass die relative Bewegbarkeit des gemeinsamen Bauteils 16 relativ zum Lagerdeckel 32 bzw. Dosierwalzenhülse 24 erreicht werden kann.

Die beschriebene Vorrichtung 8 zum Dosieren von pulverförmigem Füllgut arbeitet wie folgt. Das Dosierrad 11 eignet sich gerade für die Dosierung kleiner Pulvermengen im pharmazeutischen Bereich. Die Menge des zu dosierenden pulverförmigen Füllguts wird über das Volumen der Dosierkammer 13 bestimmt. Dieses Volumen der Dosierkammer 13 lässt sich aufgrund der Relativbewegung des gemeinsamen Bauteils 16 gegenüber der Dosierwalzenhülse 24 verstellen. In einem nicht gezeigten Fülltrichter befindet sich das abzufüllende Füllgut, beispielsweise Pulver oder Pellets. Der darunter liegende Behälter ist an seiner unteren Öffnung durch die Dosierwalzenhülse 24 des Dosierrads 11 und in Laufrichtung durch ein ebenfalls nicht gezeigtes Pulverrakel begrenzt. Das Dosierrad 11 kann fliegend gelagert werden oder aber auch mit einem Gegenlager abgestützt werden. Das Dosierrad 11 wird durch eine Antriebswelle angetrieben. In einer Füllposition ist das Dosierrad 11 derart unterhalb eines Füllgutbehälters angeordnet, dass die Dosierkammern 13 mit Füllgut befüllt werden können. Zur Unterstützung des Füllprozesses wird über den Luftkanal 28 ein Unterdruck über den Filter 12 aufgebaut, der das Füllgut in die Dosierkammern 13 ansaugt bis hin zum Filter 12. Der Filter 12 verhindert dabei, dass das Füllgut in den Luftkanal 28 gelangt. Es sei angemerkt, dass auch andere Füllverfahren, beispielsweise mechanisch oder ausschließlich auf Schwerkraft beruhend, zur Füllung der Dosierkammern 13 verwendet werden können.

Wenn die Dosierkammern 13 befüllt sind, wird das Dosierrad 11 um 180° gedreht, so dass die Dosierkammern 13 in einer Abgabeposition angeordnet sind. In der Abgabeposition ist der Luftkanal 28 mit einem Druckanschluss verbunden, so dass Druckluft durch den Filter 12 strömt und das in den Dosierkammern 13 befindliche Füllgut herausdrückt. Unter dem Dosierrad 11 sind dabei nicht gezeigte zu befüllende Behältnisse angeordnet, in welche das Füllgut dann abgegeben wird. Bei den Behältnissen kann es sich beispielsweise um geöffnete Kapseln handeln, die auf einem Förderband oder einem Kapselunterteilsegment angeordnet sind und nach dem Befüllen weitertransportiert werden. Da in dem Dosierrad 11 mehrere gemeinsame Bauteile 16 vorgesehen sind, im Ausführungsbeispiel vorzugsweise vier, wird das Dosierrad 11 immer taktweise bis zum nächsten gemeinsamen Bauteil 16 gedreht, so dass die jeweils oben stehenden Dosierkammern 13 befüllt werden können, während die unten stehenden gefüllten Dosierkammern 13 wieder entleert werden.

Das gemeinsame Bauteil 16 ist als Formatteil ausgeführt. Es umfasst insbesondere mehrere in axialer Richtung in Reihe angeordnete Hülsenansätze 18, die jeweils zu dem Hohlraum 19 hin geöffnet sind. Die Seitenflächen des gemeinsamen Bauteils 16 sind gegenüber den Führungsflächen 15 der Führungsmittel 14 so orientiert, dass eine radiale Verschiebbarkeit des gemeinsamen Bauteils 16 mit den integrierten Hülsenansätzen 18 möglich wird. Die in Richtung Mittelpunkt des Dosierrads 11 orientierte Grundfläche des gemeinsamen Bauteils 16 wirkt zur radialen Verstellung mit einem Nocken des Verstellmittels 10 zusammen. Das Verstellmittel 10 ist drehbar gelagert und lässt sich über eine entsprechende Verstellnabe mit zugehörigem Verstellrad verdrehen. Soll das Dosiervolumen der Dosierkammer 13 verkleinert werden, so drückt der Nocken des Verstellmittels 10 das gemeinsame Bauteil 16 weiter nach außen. Damit schiebt sich die Außenfläche der Hülse 18 in die Öffnung der Dosierwalzenhülse 24. Wenn das Dosiervolumen vergrößert werden soll, wird der Nocken so verdreht, dass die Federmittel 30 das gemeinsame Bauteil 16 näher zum Mittelpunkt des Dosierrads 11 bewegen. Hierzu drückt das Federmittel 30, das durch die Führungsmittel 14 gehalten wird, gegen die Schulter 17 des gemeinsamen Bauteils 16. Alternativ könnte auch eine Feder 30' vorgesehen sein, die sich an einer weiter außen liegenden Fläche des Führungsmittels 14 abstützt und gegenüber einer weiter in Richtung Mittelpunkt des Dosierrads 11 ausgebildeten Schulter des gemeinsamen Bauteils 16 drückt zur Ausübung der gewünschten Kraft hin zum Mittelpunkt des Dosierrads 11.

Der im wesentlichen rechteckförmig ausgebildete Hohlraum 19 des gemeinsamen Bauteils 16 dient der Aufnahme und Führung des hierin angeordneten Stützmittels 20. Das Stützmittel 20 drückt den an seiner Oberseite anzuordnenden Filter 12 gegen die Unterseite der Dosierkammer 13 bzw. den entsprechenden Öffnungen des gemeinsamen Bauteils 16. Außerdem gibt es einen zentralen Luftkanal 28, über den die entsprechenden Öffnungen 21 und dazwischen angeordneten Filter 12 die Dosierkammern 13 mit Druckluft oder Unterdruck beaufschlagt werden können. Druckluft wird eingebracht, wenn die befüllte Dosierkammer 13 zur Füllgutübergabe in das zu befüllende Behältnis an der Unterseite des Dosierrades 11 abgegeben werden soll. Druckluft kann ebenso vorgesehen sein zum Ausblasen der Filter 12 an einer Reinigungsstation in einer Reinigungsstellung, beispielsweise im waagrechten Zustand. Über den Luftkanal 28 wird ein Vakuum an die Dosierkammer 13 angelegt, um das Einsaugen des Füllguts zu unterstützen. Die Luftversorgung kann durch einen Schleifring oder eine Drehdurchführung eingeleitet und teilweise gesteuert werden. Es sind mehrere gemeinsame Bauteile 16 vorgesehen, die jeweils mehrere Hülsenansätze 18 für mehrere Dosierkammern 13 umfassen. Doch auch eine andere Anzahl als die vier gezeigten gemeinsamen Bauteile 16 ist möglich.

Für mehrere Dosierkammern 13 eines gemeinsamen Bauteils 16 kann nur einziger Filter 12, der rechteckförmig ausgebildet ist, vorgesehen werden. Auch ein Austausch des Filters 12 ist sehr leicht möglich, indem das Stützmittel 20 gelockert wird, so dass es sich in Richtung zum Mittelpunkt des Dosierrads 11 bewegt. Dadurch wird der Filter 12 nicht mehr geklemmt, sondern lässt sich leicht seitlich zum Austausch entnehmen. Nach dem Wechsel des Filters 12 können die Klemmmittel 22 wieder aktiviert werden, so dass sie das Stützmittel 20 wieder radial nach außen gegen die Unterseite des Filters 12 drücken.

Auch der Bau der Dosiervorrichtung 8 vereinfacht sich insbesondere durch das Vorsehen des gemeinsamen Bauteils 16. Dieses kann nun vormontiert mit Filter 12 und Stützmittel 20 in die entsprechenden Führungsflächen 15 eingebracht werden. Anschließend werden dann in Führungsmitteln 14 die Federmittel 30 angebracht, die auf die Schultern 17 des gemeinsamen Bauteils 16 drücken. Anschließend wird die Dosierwalzenhülse 24 der entsprechenden Öffnungen mit den Oberseiten der Führungsmittel 14 verbunden, sowie seitlich mit entsprechenden Lagerdeckeln 32 befestigt.

Die Vorrichtung 8 eignet sich insbesondere zur Dosierung von pulverförmigem Füllgut, ist jedoch hierauf nicht eingeschränkt. Auch sogenannte Pellets, kleinste kugelförmige Teile können mittels der Vorrichtung 8 abgefüllt werden.

## Patentansprüche

1. Vorrichtung (8) zum Dosieren von pulverförmigem Füllgut, umfassend zumindest ein Dosierrad (11) mit mehreren Dosierkammern (13) zur Aufnahme von Füllgut, wobei mehrere Dosierkammern (13) über ein gemeinsames Bauteil (16) gebildet sind, wobei das gemeinsame Bauteil (16) so ausgestaltet ist, dass es über ein Verstellmittel (10) in radialer Richtung des Dosierrads (11) verschoben werden kann zur Veränderung des Volumens der Dosierkammern (13), wobei das gemeinsame Bauteil (16) mehrere Hülsenansätze (18) aufweist als Begrenzung der Dosierkammern (13), **dadurch gekennzeichnet, dass** die Vorrichtung (8) ein Stützmittel (20) mit den Hülsenansätzen (18) entsprechenden Öffnungen (21) und einen Filter (12) umfasst, und dass das gemeinsame Bauteil (16) zumindest einen Hohlraum (19) zur Aufnahme des Stützmittels (20) aufweist, wobei dessen Oberseite als Gegenfläche für den Filter (12) dient, der zwischen den Hülsenansätzen (18) und den Öffnungen (21) des Stützmittels (20) angeordnet ist, wobei das Stützmittel (20) einen gemeinsamen, die Öffnungen des Stützmittels (20) verbindenden, Luftkanal (28) aufweist, der in Verbindung steht mit den mehreren Dosierkammern (13).

2. Vorrichtung nach einem der vorhergehenden Ansprüche, **dadurch gekennzeichnet, dass** ein Federmittel (30) vorgesehen ist, das zur Verstellung in radialer Richtung des Dosierrads (11) auf das gemeinsame Bauteil (16) einwirkt.

3. Vorrichtung nach einem der vorhergehenden Ansprüche, **dadurch gekennzeichnet, dass** ein einziger Filter (12) vorgesehen ist für mehrere Dosierkammern (13).

4. Vorrichtung nach einem der vorhergehenden Ansprüche, **dadurch gekennzeichnet, dass** mehrere gemeinsame Bauteile (16) vorgesehen sind, die jeweils eine Vielzahl von Dosierkammern (13) mit den entsprechenden Hülsenansätzen (18) aufweisen.

5. Vorrichtung nach einem der vorhergehenden Ansprüche, **dadurch gekennzeichnet, dass** der Luftkanal (28) mit einem Kupplungsteil (26) verbunden ist.

6. Vorrichtung nach einem der vorhergehenden Ansprüche, **dadurch gekennzeichnet, dass** Klemmmittel (22) vorgesehen sind, die das Stützmittel (20) gegen das gemeinsame Bauteil (16) drücken zur Befestigung des Filters (12).

## Claims

1. Apparatus (8) for metering pulverulent filling material, comprising at least one metering wheel (11) with a plurality of metering chambers (13) for accommodating filling material, wherein a plurality of metering chambers (13) is formed by means of a common component (16), and the common component (16) is designed in such a way that it can be moved in the radial direction of the metering wheel (11) using an adjusting means (10) in order to change the volume of the metering chambers (13), wherein the common component (16) has a plurality of sleeve projections (18) as a boundary for the metering chambers (13), **characterized in that** the apparatus (8) comprises a supporting means (20) having openings (21) corresponding to the sleeve projections (18) and a filter (12), and **in that** the common component (16) has at least one cavity (19) to accommodate the supporting means (20), wherein the upper side of said supporting means serves as a countersurface for the filter (12) which is arranged between the sleeve projections (18) and the openings (21) of the supporting means (20), wherein the supporting means (20) has a common air duct (28), which connects the openings of the supporting means (20) and is connected to the plurality of metering chambers (13).

2. Apparatus according to one of the preceding claims, **characterized in that** a spring means (30) is provided, said spring means acting on the common component (16) for adjustment in the radial direction of the metering wheel (11) .

3. Apparatus according to either of the preceding claims, **characterized in that** a single filter (12) is provided for a plurality of metering chambers (13).

4. Apparatus according to one of the preceding claims, **characterized in that** a plurality of common components (16) is provided, each having a multiplicity of metering chambers (13) with the corresponding sleeve projections (18) .

5. Apparatus according to one of the preceding claims, **characterized in that** the air duct (28) is connected to a coupling part (26).

6. Apparatus according to one of the preceding claims, **characterized in that** clamping means (22) are provided, said clamping means pressing the supporting means (20) against the common component (16) in order to fix the filter (12).

## Revendications

1. Dispositif (8) pour le dosage de matières pulvérulentes, comprenant au moins une roue de dosage (11) avec plusieurs chambres de dosage (13) destinées à contenir des matières, dans lequel plusieurs chambres de dosage (13) sont formées par une pièce commune (16), dans lequel la pièce commune (16) est configurée de telle manière qu'elle puisse être déplacée dans la direction radiale de la roue de dosage (11) à l'aide d'un moyen de déplacement (10) pour faire varier le volume des chambres de dosage (13), dans lequel la pièce commune (16) présente plusieurs saillies de douille (18) comme limitation des chambres de dosage (13), **caractérisé en ce que** le dispositif (8) comprend un moyen de soutien (20) avec des ouvertures (21) correspondant aux saillies de douille (18) et un filtre (12), et **en ce que** la pièce commune (16) présente au moins une cavité (19) destinée à contenir le moyen de soutien (20), dans lequel le côté supérieur de celui-ci fait office de face opposée pour le filtre (12), qui est disposé entre les saillies de douille (18) et les ouvertures (21) du moyen de soutien (20), dans lequel le moyen de soutien (20) présente un canal d'aération commun (28), reliant les ouvertures du moyen de soutien (20), et qui est en communication avec les plusieurs chambres de dosage (13).

2. Dispositif selon l'une quelconque des revendications précédentes, **caractérisé en ce qu'**il est prévu un moyen de ressort (30), qui agit sur la pièce commune (16) pour le déplacement dans la direction radiale de la roue de dosage (11).

3. Dispositif selon l'une quelconque des revendications précédentes, **caractérisé en ce qu'**il est prévu un seul filtre (12) pour plusieurs chambres de dosage (13).

4. Dispositif selon l'une quelconque des revendications précédentes, **caractérisé en ce qu'**il est prévu plusieurs pièces communes (16), qui présentent chacune une multiplicité de chambres de dosage (13) avec les saillies de douille correspondantes (18).

5. Dispositif selon l'une quelconque des revendications précédentes, **caractérisé en ce que** le canal d'aération (28) est relié à une pièce de couplage (26) .

6. Dispositif selon l'une quelconque des revendications précédentes, **caractérisé en ce qu'**il est prévu des moyens de serrage (22), qui poussent le moyen de soutien (20) contre la pièce commune (16) pour la fixation du filtre (12).
